Europäisches Patentamt

European Patent Office

Office européen des brevets

(11) Numéro de publication: **0 395 150**
**A1**

## (12) DEMANDE DE BREVET EUROPEEN

(21) Numéro de dépôt: 90200992.7

(22) Date de dépôt: 20.04.90

(51) Int. Cl.5: **G06F 15/80, H04N 7/13**

(30) Priorité: 26.04.89 FR 8905532

(43) Date de publication de la demande:
**31.10.90 Bulletin 90/44**

(84) Etats contractants désignés:
**DE FR GB SE**

(71) Demandeur: **LABORATOIRES D'ELECTRONIQUE PHILIPS**
**3, Avenue Descartes**
**F-94450 Limeil-Brévannes(FR)**
(84) **FR**

Demandeur: **N.V. Philips'**
**Gloeilampenfabrieken**
**Groenewoudseweg 1**
**NL-5621 BA Eindhoven(NL)**
(84) **DE GB SE**

(72) Inventeur: **Sirat, Jacques-Ariel, Société Civile S.P.I.D.**
**209 rue de l'Université**
**F-75007 Paris(FR)**
Inventeur: **Viala, Jean-Renaud, Société Civile S.P.I.D.**
**209 rue de l'Université**
**F-75007 Paris(FR)**
Inventeur: **Remus, Christian, Société Civile S.P.I.D.**
**209 rue de l'Université**
**F-75007 Paris(FR)**

(74) Mandataire: **Landousy, Christian et al**
**Société Civile S.P.I.D. 156, Boulevard Haussmann**
**F-75008 Paris(FR)**

(54) **Procédé et structure pour la compression de données.**

(57) Procédé pour la compression de données qui est mis en oeuvre à l'aide d'un codeur, qui opère une transformée à l'aide d'un réseau de neurones de codage, et d'un décodeur, qui comprend un réseau de neurones de décodage apparié qui effectue quasiment la transformée inverse du codeur.

Le procédé met en compétition entre eux M réseaux de neurones de codage ($30_1$ à $30_M$) avec M>1 placés à l'émission qui effectuent un même type de transformée et dont les données codées de l'un d'entre eux sont émises, après sélection (32,33) à un instant donné, vers un réseau de neurones de décodage apparié faisant partie d'une batterie de plusieurs réseaux de neurones de décodage appariés ($60_1$ à $6_Q$) placés à la réception.

L'apprentissage est effectué à partir d'exemples prédéterminés.

Le codeur peut comprendre, outre le réseau de neurones de codage ($30_1$ à $30_M$) un réseau de neurones de décodage apparié ($35_1$ à $35_M$) afin d'opérer la sélection (32,33) du meilleur réseau de neurones de codage selon un critère d'erreur.

L'invention concerne également un circuit de codage, un circuit de décodage et une structure de compression de données.

Application au traitement d'images.

FIG.4

## PROCEDE ET STRUCTURE POUR LA COMPRESSION DE DONNEES

L'invention concerne un procédé pour la compression de données qui est mis en oeuvre à l'aide :

- d'un codeur, qui opère une transformée à l'aide d'un réseau de neurones de codage, placé à l'émission, ayant un nombre de neurones d'entrée supérieur ou égal au nombre de neurones de sortie,
- et d'un décodeur, qui comprend un réseau de neurones de décodage apparié au réseau de neurones de codage, placé à la réception, qui effectue quasiment la transformée inverse du codeur avec un nombre de neurones d'entrée inférieur ou égal au nombre de neurones de sortie,

le procédé comprenant les étapes suivantes :
- apprentissage des réseaux de neurones de codage et de décodage, par adaptation de leurs coefficients synaptiques à des exemples de blocs de données d'entrée,
- codage des blocs de données à traiter,
- émission, par un canal, des données codées,
- décodage des données codées reçues par le réseau de neurones de décodage apparié et formation de blocs de données reconstituées.

Elle concerne également un codeur et un décodeur mettant en oeuvre un tel procédé. Le procédé peut être utilisé dans une structure regroupant un codeur, un décodeur et un canal de transmission.

Une structure de ce genre est décrite dans le document : "Image compression by back propagation : an example of extensional programming" par G.W. COTTRELL, P. MUNRO et D. ZIPSER dans "Advances in Cognitive Science Vol. 3, 1987 Norwood NJ, Editeur : N.E. SHARKEY.

Ce document décrit une technique de compression d'images qui met en oeuvre deux réseaux de neurones associés, l'un servant au codage transformant les données d'entrée en données codées et l'autre servant au décodage effectuant un mécanisme inverse. Pour cela il est nécessaire d'apprendre aux réseaux de neurones de codage et de décodage des exemples et pour cela modifier leurs coefficients synaptiques pour que les données codées soient conformes aux données attendues pour les types d'exemples déterminés. Cet apprentissage peut être effectué selon la technique connue de rétropropagation du gradient ou la technique connue d'analyse en composantes principales. Les données codées sont transmises, par un canal, à un décodeur muni d'un réseau de neurones de décodage qui effectue le mécanisme inverse. Pour cela, on charge dans le réseau de neurones de décodage, des coefficients synaptiques qui sont déterminés à l'issue de l'étape d'apprentissage. La structure peut alors opérer avec des données issues d'une image à traiter.

Une telle structure est composée de trois couches lorsque les réseaux de neurones de codage et de décodage sont joints :
- une couche d'entrée à N neurones qui reçoit à chaque instant un bloc de données d'entrée
- une couche cachée de P neurones avec $P<N$ dont les sorties quantifiées sur Q bits représentent l'information comprimée,
- une couche de sortie de N neurones pour restituer un bloc de données de sortie.

Mais une telle structure va être adaptée pour un type de texture donné et va ensuite traiter tous les blocs d'une même image et toutes les images successives avec les mêmes coefficients synaptiques. Donc des images ayant des textures d'images ou des textures de zones très différentes dans leur uniformité ou leur non-uniformité, vont être traitées de la même façon. Il s'ensuit qu'un codage pourra être optimal pour un type de textures et être mal adapté pour un autre type de texture.

Le problème posé est donc de tenir compte de la nature spatialement et temporellement non-homogène des données d'images afin d'augmenter le taux de compression sans alourdir la charge de traitement imposée à un réseau de neurones.

La solution à ce problème consiste en un procédé qui met en compétition entre eux M réseaux de neurones de codage avec $M>1$ placés à l'émission qui effectuent un même type de transformée et dont les données codées de l'un d'entre eux sont émises, après sélection à un instant donné, vers un réseau de neurones de décodage apparié faisant partie d'une batterie de plusieurs réseaux de neurones de décodage appariés placés à la réception, l'apprentissage étant effectué séparément ou simultanément par chaque réseau de neurones de codage et de décodage pour qu'ils apprennent une classe particulière d'exemples prédéterminés de blocs de données en s'adaptant à l'aide d'un critère d'adaptation prédéterminé, un circuit de sélection sélectionnant, sur la base d'un critère de sélection, le réseau de neurones de codage effectuant le meilleur codage des données à traiter et transmettant, par le canal, les P données codées par ce réseau de neurones de codage et son index pour rendre actif le réseau de neurones de décodage apparié.

Un bloc de N données va être ainsi codé sur P données de sortie avec $P \leq N$. Ces P données d'un bloc peuvent être délivrées par un seul réseau de neurones. Elles peuvent aussi être délivrées une à une par P réseaux de neurones. Les P données de sortie $y_k$ peuvent être quantifiées respectivement

sur $Q_k$ bits (où k est l'indice du neurone de la couche cachée).

Selon un premier mode de réalisation, le critère de sélection est appliqué a priori. Dans ce cas le circuit de sélection compare au moins une caractéristique de chaque bloc de données à traiter avec une caractéristique correspondante prédéterminée et sélectionne le réseau de neurones de codage et le réseau de neurones de décodage apparié se rapportant à la caractéristique la plus approchante.

Les caractéristiques prises en compte peuvent être formées par la valeur minimale et la valeur maximale des données.

Mais il est possible d'utiliser un critère de sélection a postériori. Ainsi selon un deuxième mode de réalisation, le circuit de sélection détermine la somme de toutes les énergies ( $\Sigma_k(y_k)^2$ ) des neurones de sortie des réseaux de neurones de codage et sélectionne celui pour lequel cette énergie est maximale.

Il est également possible d'utiliser un autre critère de sélection a postériori. Ainsi selon un troisième mode de réalisation le codeur comprend plusieurs couples de réseaux de neurones, un couple étant constitué d'un réseau de neurones de codage et d'un réseau de neurones de décodage apparié, le circuit de sélection comparant lors de l'étape de codage et pour chaque couple, les données d'entrée du réseau de neurones de codage avec les données de sortie de son réseau de neurones de décodage, le critère de sélection du meilleur codage consistant à sélectionner le réseau de neurones de codage pour lequel cet écart est minimal. L'écart peut être mesuré par l'erreur quadratique moyenne ou toute autre fonction. Elle peut par exemple privilégier les basses fréquences spatiales afin de s'adapter à la sensibilité de l'oeil.

En fonction de la nature de l'application (transmission et enregistrement d'images ou de son à des débits variant entre quelques KHz pour un son à faible résolution à quelques centaines de MHz pour des images de TV à haute définition) les contraintes en fréquence d'échantillonnage, précision, adaptativité, coût... ne seront pas les mêmes. Il est donc nécessaire que les réseaux de neurones s'adaptent à ces tâches de natures différentes. Pour cela au cours de l'apprentissage le procédé met en oeuvre une technique d'adaptation prédéterminée. Cette technique peut être l'algorithme de rétropropagation du gradient qui est connu par exemple du document "PARALLEL DISTRIBUTED PROCESSING" D.E. RUMELHART, G.E. HINTON, R.J. WILLIAMS, Learning Internal Representations by error propagation chap. 8 p.318 MIT Press. Editeur : J.A. FELDMAN, P.J. HAYES, D.E. RUMELHART.

Ce critère peut être l'algorithme d'analyse en composantes principales de la matrice de covariance qui est connu par exemple du document : "Auto-Association by Multilayer Perceptrons and Singular Value Decomposition" H. Bourlard & Y. Kamp Biological Cybernetics, vol. 59, 1988 pp. 291-294.

Pour effectuer l'apprentissage, l'image peut être segmentée en sous-images qui fournissent les exemples de blocs de données à traiter. Egalement ces exemples peuvent être pris dans un catalogue de textures.

Lorsque l'apprentissage est fait a priori sur un ensemble de séquences représentatives, le nombre M de réseaux à mettre en compétition doit être suffisamment grand afin de couvrir la quasi totalité des distributions possibles de séquences.

La manière la plus naturelle d'opérer est de disposer de M réseaux de neurones opérationnels simultanément au codage et au décodage.

Une autre possibilité permettant de réduire la complexité du codeur et du décodeur consiste à partitionner l'ensemble des M réseaux en plusieurs sous-ensembles de m réseaux avec m très inférieur à M et au niveau du codage, à sélectionner régulièrement (par exemple à chaque image) un de ces sous-ensembles en fonction d'un certain critère (par exemple la minimisation de l'erreur quadratique moyenne sur l'image courante ou l'image précédente). Au niveau du décodage, le nombre de réseaux est alors limité à m et, préalablement à la réception des séquences codées, les caractéristiques de ces m sous-réseaux de codage y sont chargées. Ce chargement peut se faire à partir d'informations transmises par le codeur ou préférentiellement d'informations mémorisées au niveau du décodeur. On gagne alors une réduction du nombre d'organes de traitement dans un rapport m/M.

On constate qu'il est possible que les P données de sortie proviennent d'une seule des M voies de traitement (codage et décodage). Il est aussi possible de répartir la charge du traitement sur l'ensemble des M réseaux de neurones du codeur et du décodeur.

Au niveau du codage en désignant par $X = \{x_l\}$ avec $l = 1...N$, les données d'entrée des réseaux et par $Y_i = \{y_{k,i}\}$ avec $k = 1...P$, les sorties d'un réseau de codage $RC_i$ avec $i = 1...M$, la transformée faite par le codeur s'écrit :
$$Y_{k,i} = F_{i,k}(X)$$
où $F_{i,k}$ est la réponse du réseau i.

Comme seul un réseau de codage du codeur et un réseau de décodage du décodeur opèrent simultanément ils doivent calculer les P valeurs de sortie en un cycle élémentaire de calcul.

Il est donc possible de répartir ce calcul sur l'ensemble des réseaux en définissant des réseaux $CR_k$ à M sorties dont la réponse sera caractérisée par $F_{i,k}$. On aura alors en sortie des $CR_k$ le vecteur

$Z(k) = \{Z_i(k)\}$ avec $1 \leq i \leq M$ tel que :

$Z_i(k) = F_{i,k}(X) = y_{k,i}$

Chacun de ces P nouveaux circuits n'aura à calculer pendant un temps élémentaire que la sortie $Z_i(k)$ correspondant à la sortie k du réseau d'indice j.

L'invention sera mieux comprise à l'aide des figures suivantes données à titre d'exemples non limitatifs qui représentent :

figures 1A, 1B : une représentation schématique d'un réseau de neurones de codage et de décodage,

figure 2 : un schéma d'une unité de traitement d'un réseau de neurones,

figure 3 : un schéma d'un codeur selon l'invention muni d'un circuit de sélection a priori,

figures 4, 5A : deux schémas d'un codeur selon l'invention muni d'un circuit de sélection a postériori,

figure 5B : un schéma semblable à celui de la figure 5A mais avec une mémoire de l'ensemble des coefficients synaptiques,

figures 6A, 6B : deux schémas d'un codeur selon l'invention, dont l'un possède une mémoire de l'ensemble des coefficients synaptiques,

figures 7A, 7B, 8A, 8B : une représentation schématique des deux possibilités de partage des calculs sur les réseaux de neurones du codage.

La figure 1A représente un schéma du principe du traitement effectué par un réseau de neurones de codage. Les données d'entrée $x_1...x_l...x_N$ sont présentées au réseau et arrivent sur les neurones d'entrée $10_1$ à $10_N$ d'une couche d'entrée. Ces neurones sont connectés aux neurones de sortie $11_1...11_k...11_p$ d'une couche de sortie. A chaque liaison est associé un coefficient synaptique $C_{kl}$ - (l:entrée, k:sortie). Le nombre de neurones d'entrée N est supérieur ou égal au nombre de neurones de sortie P afin d'effectuer une compression des données. Ce sont ces données codées qui sont destinées à être émises par un canal. Celui-ci peut être constitué par une liaison par fils ou par un milieu de transmission.

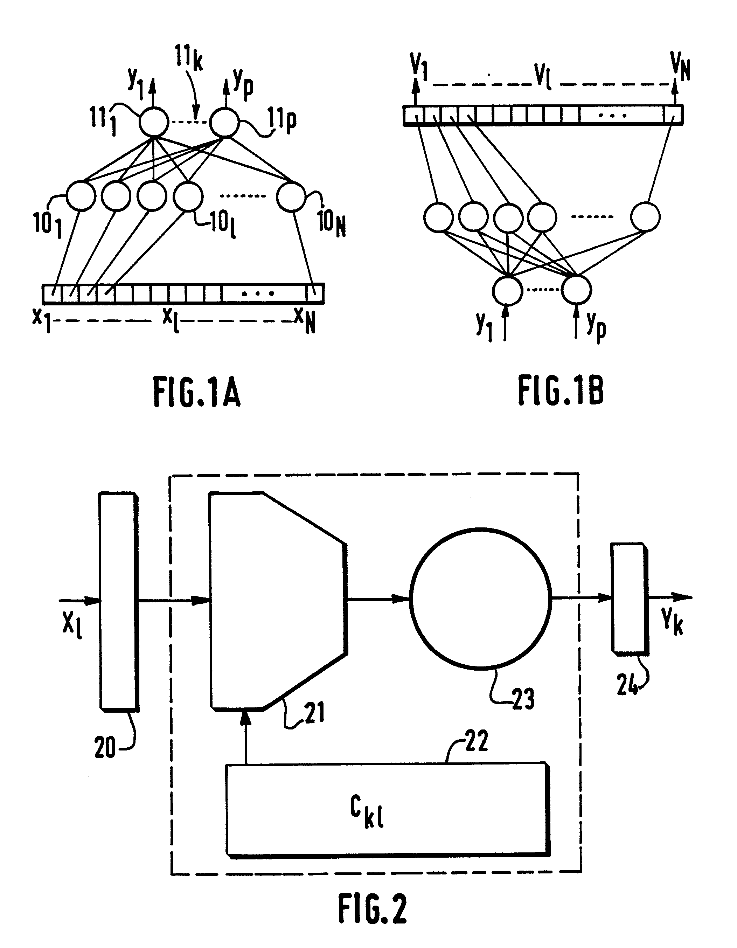

La figure 1B représente le schéma de principe du traitement effectué par le réseau de neurones de décodage en couches reliées entre elles comme pour le réseau de neurones de codage. Il reçoit les données codées $y_1...y_p$ et délivre en sortie des données décodées $V_1...V_N$.

La figure 2 représente un processeur de traitement d'un réseau de neurones. Un registre d'entrée 20 délivre les données d'entrée $X_l$ à une unité de calcul 21 qui effectue le calcul : $\Sigma_k\ C_{kl}.\ X_l$. Les coefficients synaptiques $C_{kl}$ sont lus dans une mémoire 22. La sortie de l'unité de calcul est reliée à un quantifieur 23 qui applique une fonction non linéaire F. Les données codées $y_k$ apparaissent sur un registre de sortie 24.

Avant d'effectuer des phases de codage ou décodage, on doit effectuer des phases d'apprentissage permettant d'adapter les coefficients synaptiques des réseaux de neurones à la tache de compression. Pour cela on présente sur l'entrée des exemples prédéterminés pour lesquels le résultat désiré est connu à l'avance. Il suffit de comparer les résultats obtenus avec les résultats désirés et selon un mécanisme adaptatif les coefficients synaptiques $C_{kl}$ sont adaptés à la tache prévue. Cette adaptation ne sera pas développée ici. Elle est effectuée de manière connue pour un réseau de neurones. Différents algorithmes sont possibles, les plus utilisés étant l'algorithme de rétropropagation du gradient et l'algorithme de l'analyse en valeurs principales de la matrice de covariance. Des références ont déjà été citées pour la mise en oeuvre de ces algorithmes.

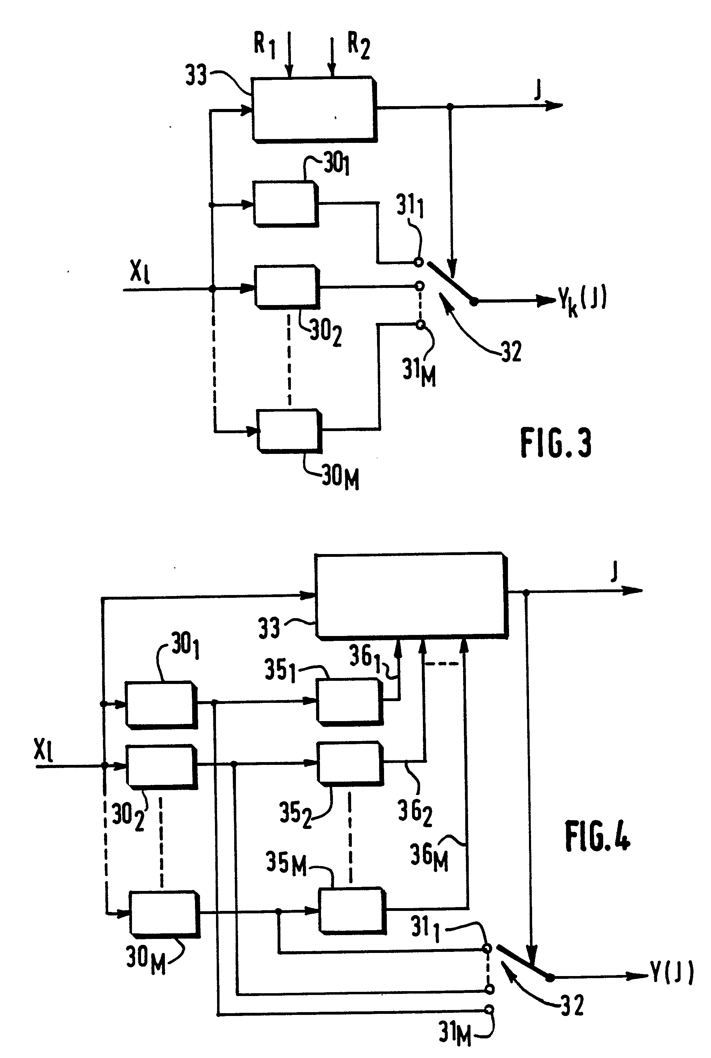

La figure 3 représente le schéma d'un codeur selon l'invention. Il comprend M réseaux de neurones de codage $30_1$, $30_2....30_M$ qui reçoivent tous les données d'entrée $X_l$. Chaque réseau de neurones opère pour une classe d'exemples prédéterminés sur lequel il s'est adapté au cours de la phase d'apprentissage. Les résultats obtenus $(y_k, k = 1,P)$ par chaque réseau de neurones sont délivrés sur des sorties représentées symboliquement sur la figure par les bornes $31_1...31_M$.

Pour opérer la sélection en sortie par le sélecteur 32, on utilise un circuit de sélection 33 qui reçoit les données $X_l$ à coder. Ce circuit de sélection dispose d'un groupe de références $R_1$, $R_2...$ et compare les données $X_l$ à ces références. Une référence est reliée à une caractéristique du bloc de données. Par exemple les caractéristiques prises en compte sont formées par la valeur minimale et la valeur maximale des données de l'exemple et du bloc de données à traiter.

A chaque exemple de bloc de données est associé un groupe de références donné. Lorsque la caractéristique du bloc de données est par exemple supérieure ou inférieure à une référence ou comprise entre deux références, le circuit de sélection 33 délivre un index J qui se rapporte au groupe du réseau de neurones le mieux placé. Le sélecteur 32 sélectionne le réseau de neurones ayant cet index. Les données $y_k(J)$ sont émises ainsi que l'index J par un canal de transmission. Ce mode de réalisation est dit a priori.

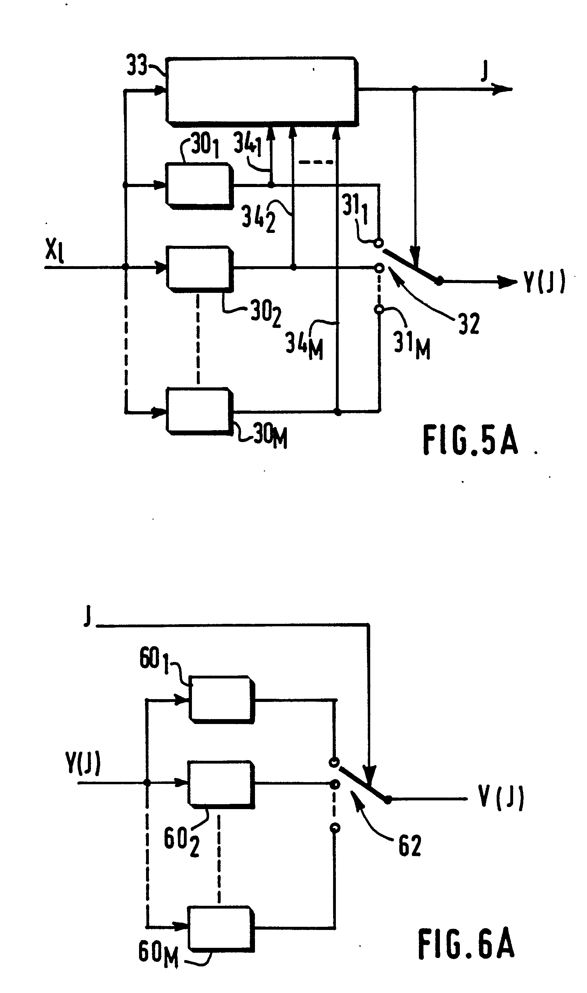

Selon un deuxième mode de réalisation du codeur représenté sur la figure 5A, le circuit de sélection ne dispose pas de groupes de références. Son mode de fonctionnement est a postériori. Dans ce cas il reçoit les sorties $y_k$ $34_1...34_M$ de tous les réseaux de neurones et détermine une caractéristique, par exemple l'énergie des données, et sélectionne le réseau de neurones qui maximise cette énergie. Comme précédemment le sélecteur 32 sélectionne selon l'index J.

Selon un troisième mode de réalisation du codeur représenté sur la figure 4, le mode de fonctionnement est aussi a postériori. Dans ce cas chaque réseau de neurones de codage $30_1$... $30_M$ est suivi d'un réseau de neurones de décodage $35_1$...$35_M$. Le circuit de sélection 33 reçoit alors les sorties $36_1$...$36_M$ de ces réseaux de neurones de décodage et compare chacune de ces sorties avec les données d'entrée $X_1$. Le circuit de sélection détermine alors le réseau de neurones qui effectue le meilleur codage et délivre son index J qui active le sélecteur 32.

Ainsi l'invention concerne un circuit de codage pour la compression de données comprenant M réseaux de neurones de codage avec M>1 qui apprennent puis effectuent un même type de transformée et qui sont mis en compétition, chaque réseau de codage ayant un nombre de neurones d'entrée supérieur ou égal au nombre de neurones de sortie, un circuit de sélection sélectionnant sur la base d'un critère de sélection le réseau de neurones de codage qui effectue le meilleur codage et transmettant l'index et les données codées de ce réseau de neurones sélectionné.

Les données codées et l'index J délivrés selon un de ces trois modes de réalisation sont transmises par un canal de transmission à un décodeur. Ce décodeur est représenté sur la figure 6A. Il est constitué de M réseaux de neurones de décodage $60_1$...$60_M$ et d'un sélecteur 62 qui est actionné par l'index J reçu. Ainsi le sélecteur 62 connecte à la sortie le réseau de neurones dont l'index J lui a été transmis et qui réalise le meilleur codage des données d'entrée. Ces réseaux de neurones de décodage ne sont pas soumis à une procédure d'apprentissage, mais leurs mémoires sont chargées au début du traitement par les coefficients synaptiques appropriés qui permettent d'effectuer la transformée inverse de celle opérée au codage. Chaque réseau de neurones de décodage est apparié à un réseau de neurones de codage et ses coefficients synaptiques sont déterminés au cours de l'apprentissage conjoint pour les réseaux de codage et de décodage. Ainsi l'invention concerne un circuit de décodage pour la décompression de données comprenant M réseaux de neurones de décodage avec M>1, qui effectuent un même type de transformée, chaque réseau de neurones ayant un nombre de neurones d'entrée inférieur ou égal au nombre de neurones de sortie, à chaque réseau de neurones étant affecté un index qui lui permet de ne recevoir et de ne décoder que des données codées associées à cet index.

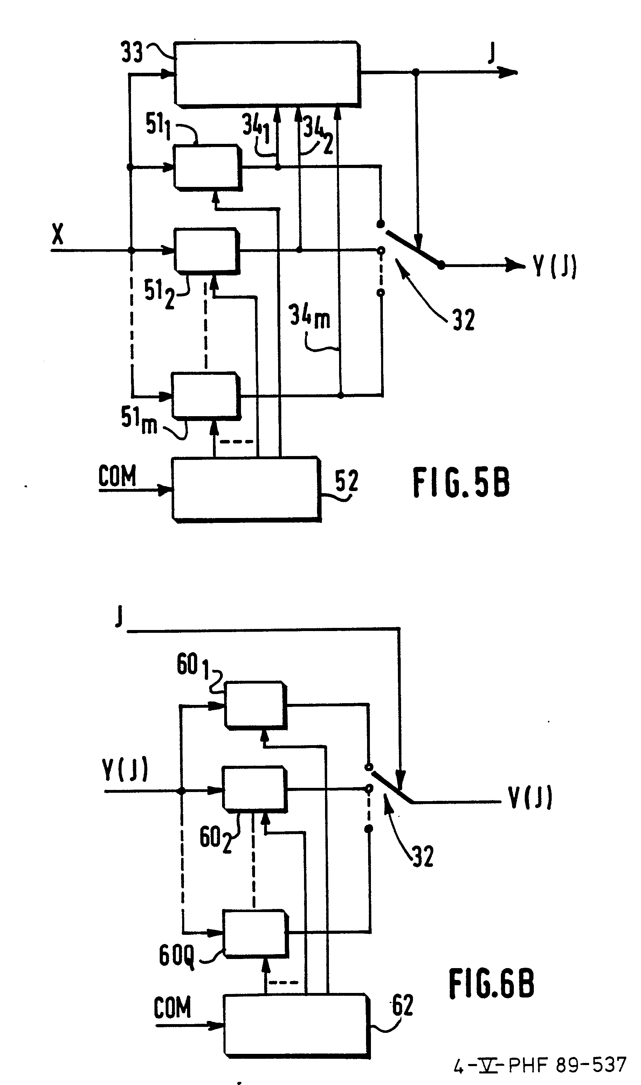

Pour diminuer la quantité de matériel nécessaire pour mettre M réseaux de neurones en compétition, il peut être intéressant d'utiliser un nombre de réseaux de neurones inférieur à M. Ceci est représenté sur la figure 5B en prenant le cas du codeur de la figure 5A mais ceci n'est pas limitatif. En effet il est suffisant d'utiliser m réseaux de neurones $51_1$...$51_m$ avec m<M et de charger dans ces m réseaux de neurones leurs coefficients synaptiques à partir d'une mémoire 52 qui renferme la totalité des coefficients synaptiques à exploiter. La lecture de cette mémoire se fait par un signal de commande COM qui peut être activé soit cycliquement selon un nombre donné d'images soit selon un autre critère. On n'exploite aussi à un instant donné que les réseaux de neurones susceptibles d'être exploités à cet instant.

Dans ce cas le circuit de codage est caractérisé en ce qu'un réseau de neurones de codage, respectivement un groupement de réseaux de neurones de codage, reçoit ses coefficients synaptiques sous la commande d'un index, respectivement d'un signal de commande, à partir d'une mémoire qui stocke les coefficients synaptiques aptes à coder plusieurs classes d'exemples de données.

Le décodeur représenté sur la figure 6B présente une structure analogue. Il possède ainsi une mémoire 62 qui stocke la totalité des coefficients synaptiques et charge dans les réseaux de neurones $60_1$...$60_m$ uniquement les coefficients synaptiques utiles à cet instant donné. Le signal de commande COM peut être transmis par le codeur ou être généré par le décodeur selon le critère choisi.

Ainsi l'invention concerne un circuit de décodage caractérisé en ce qu'un réseau de neurones de décodage, respectivement un groupement de réseaux de neurones de décodage, reçoit ses coefficients synaptiques sous la commande de l'index reçu, respectivement d'un signal de commande, à partir d'une mémoire qui stocke les coefficients synaptiques aptes à décoder plusieurs classes d'exemples de blocs de données.

Selon le fonctionnement qui a été décrit on constate qu'un seul réseau de neurones de codage et qu'un seul réseau de neurones de décodage opèrent en même temps à un instant donné. Il s'ensuit que ces deux réseaux de neurones doivent effectuer la totalité du codage et du décodage au cours d'un cycle de traitement donné. Or selon la cadence du traitement il peut être souhaitable que ce cycle de traitement soit de très courte durée. Il peut en conséquence apparaître quelques difficultés de rapidité de fonctionnement.

Pour cela on met à profit le fait que les autres réseaux de neurones sont inopérants selon le fonctionnement qui a été décrit jusqu'à présent pour répartir la charge de calcul sur tous les réseaux de neurones. Ainsi d'inopérants ces réseaux de neurones deviennent-ils opérationnels.

Un codeur et un décodeur vont ainsi être regroupés au sein d'une structure de compression de données à travers un canal de transmission. Une telle structure peut comprendre des moyens pour sélectionner les données issues des réseaux de neurones de décodage traitant un même exemple afin de fournir les textures des blocs de données.

L'idée étant qu'au lieu de faire calculer P résultats par un réseau de neurones on fait calculer un résultat par P réseaux de neurones.

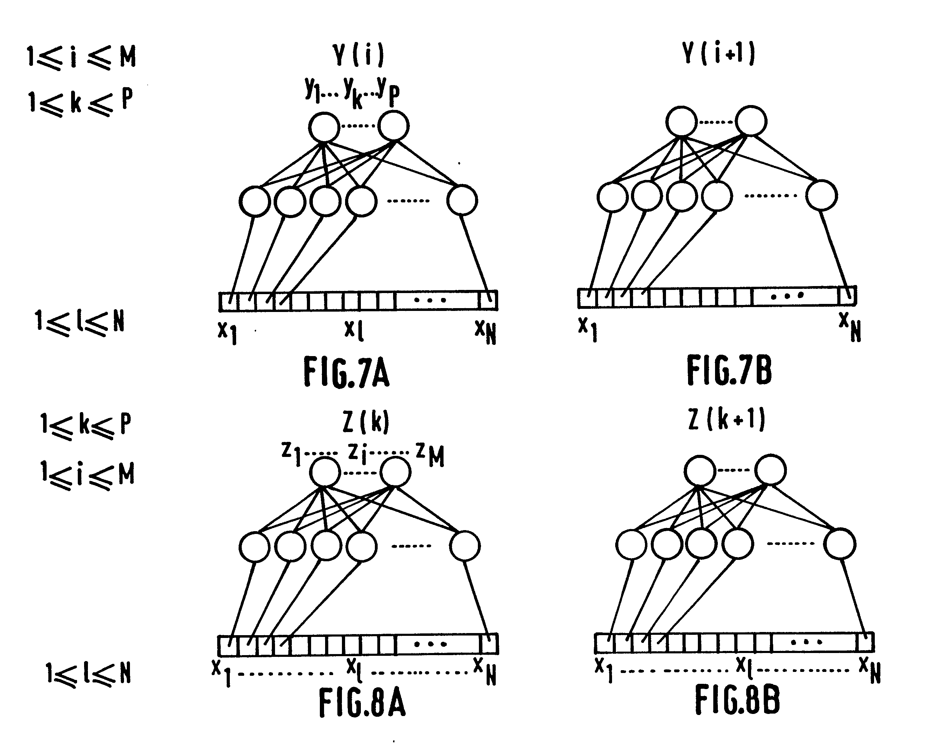

Ceci est représenté sur les figures 7A, 7B, 8A, 8B. Selon la première méthode un réseau d'indice i avec $1 \leq i \leq M$ (fig. 7A) reçoit les données $x_1$ à $x_N$ et détermine des résultats $y_k(i)$ noté $y_k$ pour chaque valeur de i avec $1 \leq k \leq P$. Le réseau d'indice $i + 1$ fait un calcul analogue pour $y_k(i + 1)$ (fig. 7B).

Il est possible de charger dans P réseaux de neurones des coefficients synaptiques qui opèrent le traitement suivant. Les données d' entrée $x_1 ... x_N$ entrent dans le réseau de neurones et déterminent des résultats $Z_i(k)$ noté $Z_k$ pour chaque valeur de i (fig. 8A).

Le réseau de neurones suivant fait un calcul analogue pour $Z_i(k + 1)$.

La répartition sur M et P réseaux de neurones est présentée respectivement sur les figures 8A et 8B dans le cas du codeur. Evidemment la même répartition existe au niveau du décodeur.

Ainsi en ayant permuté les indices i et k il est possible d'utiliser P réseaux de neurones qui déterminent M résultats chacun au lieu d'utiliser M réseaux de neurones qui déterminent P résultats chacun. La charge de calcul est ainsi répartie sur l'ensemble du matériel et un traitement plus rapide peut être effectué.

Tous les P résultats, qu'ils soient émis par un ou plusieurs réseaux de neurones, sont reliés directement à un type d'exemples prédéterminé. Dans le cas d'une image un exemple va être représentatif d'une texture de l'image. A l'issue du traitement effectué sur un certain nombre de blocs de données, les données décodées par les réseaux de neurones se rapportant à un même exemple peuvent être regroupées pour former une texture du bloc à traiter.

Il est parfois possible de limiter le nombre de codeur/décodeur utilisés. En effet après l'apprentissage, des réseaux de neurones peuvent donner en exploitation des résultats similaires. Ces résultats peuvent se regrouper en familles pour lesquelles les écarts sont très proches. Il suffit alors de choisir dans chaque famille un des réseaux de neurones représentant cette famille. On obtient ainsi un système pour lequel les données décodées sont formées par un nombre plus restreint de réseaux de neurones c'est-à-dire un par famille.

## Revendications

1. Procédé pour la compression de données qui est mis en oeuvre à l'aide :
- d'un codeur, qui opère une transformée à l'aide d'un réseau de neurones de codage, placé à l'émission, ayant un nombre de neurones d'entrée supérieur ou égal au nombre de neurones de sortie,
- et d'un décodeur, qui comprend un réseau de neurones de décodage apparié au réseau de neurones de codage, placé à la réception, qui effectue quasiment la transformée inverse du codeur avec un nombre de neurones d'entrée inférieur ou égal au nombre de neurones de sortie,

le procédé comprenant les étapes suivantes :
- apprentissage par les réseaux de neurones de codage et de décodage, par adaptation de leurs coefficients synaptiques à des exemples de blocs de données d'entrée,
- codage des blocs de données à traiter,
- émission, par un canal, des données codées,
- décodage des données codées reçues par le réseau de neurones de décodage apparié et formation de blocs de données reconstituées,

caractérisé en ce que le procédé met en compétition entre eux M réseaux de neurones de codage avec $M > 1$ placés à l'émission qui effectuent un même type de transformée et dont les données codées de l'un d'entre eux sont émises, après sélection à un instant donné, vers un réseau de neurones de décodage apparié faisant partie d'une batterie de plusieurs réseaux de neurones de décodage appariés placés à la réception, l'apprentissage étant effectué, séparément ou simultanément, par chaque réseau de neurones de codage et de décodage pour qu'ils apprennent une classe particulière d'exemples prédéterminés de blocs de données en s'adaptant à l'aide d'un critère d'adaptation prédéterminé, un circuit de sélection sélectionnant, sur la base d'un critère de sélection, le réseau de neurones de codage effectuant le meilleur codage des données à traiter et transmettant, par le canal, les P données codées par ce réseau de neurones de codage et son index pour rendre actif le réseau de neurones de décodage apparié.

2. Procédé selon la revendication 1 caractérisé en ce que les P données codées d'un bloc sont délivrées par un seul réseau de neurones.

3. Procédé selon la revendication 1 caractérisé en ce que les P données codées d'un bloc sont délivrées une à une par P réseaux de neurones.

4. Procédé selon une des revendications 1 à 3 caractérisé en ce que le circuit de sélection compare au moins une caractéristique de chaque bloc de données à traiter avec une caractéristique correspondante prédéterminée et sélectionne le réseau de neurones de codage et le réseau de neurones de décodage apparié se rapportant à la caractéristique la plus approchante.

5. Procédé selon la revendication 4 caractérisé en ce que les caractéristiques prises en compte sont formées par la valeur minimale et la valeur maximale des données de l'exemple et du bloc de données à traiter.

6. Procédé selon une des revendications 1 à 3 caractérisé en ce que le codeur comprend plusieurs couples de réseaux de neurones, un couple étant constitué d'un réseau de neurones de codage et d'un réseau de neurones de décodage apparié, le circuit de sélection comparant lors de l'étape de codage et pour chaque couple, les données d'entrée du réseau de neurones de codage avec les données de sortie de son réseau de neurones de décodage, le critère de sélection du meilleur codage consistant à sélectionner le réseau de neurones de codage pour lequel cet écart est minimal.

7. Procédé selon une des revendications 1 à 3 caractérisé en ce que le circuit de sélection détermine la somme de toutes les énergies des neurones de sortie des réseaux de neurones de codage et sélectionne celui pour lequel cette énergie est maximale.

8. Procédé selon une des revendications 1 à 7 caractérisé en ce que le critère d'adaptation prédéterminé de l'apprentissage est l'algorithme de rétropropagation du gradient.

9. Procédé selon une des revendications 1 à 7 caractérisé en ce que le critère d'adaptation prédéterminé de l'apprentissage est l'algorithme d'analyse en composantes principales de la matrice de covariance.

10. Procédé selon une des revendications 1 à 9 caractérisé en ce que pour opérer l'apprentissage, chaque codeur est associé à un décodeur annexe et à des moyens propres d'adaptation des coefficients synaptiques, les coefficients synaptiques du décodeur annexe étant transmis au décodeur pour effectuer la décompression des données.

11. Procédé selon une des revendications 1 à 9 caractérisé en ce que le procédé effectue l'apprentissage dans des moyens de codage/décodage annexes dont les coefficients synaptiques sont transférés respectivement au codeur et au décodeur opérant la compression/décompression des données.

12. Procédé selon une des revendications 1 à 11 caractérisé en ce que l'image est segmentée en sous-images qui fournissent les exemples de blocs de données à traiter.

13. Procédé selon une des revendications 1 à 11 caractérisé en ce que les exemples de blocs de données à traiter sont pris dans un catalogue de texture.

14. Circuit de codage pour la compression de données comprenant M réseaux de neurones de codage avec M>1 qui apprennent puis effectuent un même type de transformée et qui sont mis en compétition, chaque réseau ayant un nombre de neurones d'entrée supérieur ou égal au nombre de neurones de sortie, un circuit de sélection sélectionnant sur la base d'un critère de sélection le réseau de neurones de codage qui effectue le meilleur codage et transmettant l'index et les données codées de ce réseau de neurones sélectionné.

15. Circuit de codage selon la revendication 14 caractérisé en ce qu'un réseau de neurones de codage, respectivement un groupement de réseaux de neurones de codage, reçoit ses coefficients synaptiques sous la commande d'un autre index, respectivement d'un signal de commande, à partir d'une mémoire qui stocke les coefficients synaptiques aptes à coder plusieurs classes d'exemples de données.

16. Circuit de décodage pour la décompression de données comprenant M réseaux de neurones de décodage avec M>1, qui effectuent un même type de transformée, chaque réseau de neurones ayant un nombre de neurones d'entrée inférieur au nombre de neurones de sortie, à chaque réseau de neurones étant affecté un index qui lui permet de ne recevoir et de ne décoder que des données codées associées à cet index.

17. Circuit de décodage selon la revendication 16 caractérisé en ce qu'un réseau de neurones de décodage, respectivement un groupement de réseaux de neurones de décodage, reçoit ses coefficients synaptiques sous la commande de l'index reçu, respectivement d'un signal de commande, à partir d'une mémoire qui stocke les coefficients synaptiques aptes à décoder plusieurs classes d'exemples de blocs de données.

18. Structure de compression de données caractérisée en ce qu'elle comprend un circuit de codage selon une des revendications 14 ou 15 qui reçoit les données à traiter, un circuit de décodage selon l'une des revendications 16 ou 17 qui délivre un bloc de données reconstitué, et un canal de transmission qui échange les données entre les deux circuits.

19. Structure selon la revendication 18 caractérisée en ce que le nombre de réseaux de neurones sélectionnés est égal au nombre de familles qui regroupent des réseaux de neurones au comportement similaire déterminé par un critère de similitude.

**FIG.1A**

**FIG.1B**

**FIG.2**

FIG.3

FIG.4

2-$\overline{\text{V}}$- PHF 89-537

FIG.5A

FIG.6A

FIG.5B

FIG.6B

4-Ⅴ-PHF 89-537

EP 0 395 150 A1

$1 \leqslant i \leqslant M$

$1 \leqslant k \leqslant P$

Y(i)

$y_1 \dots y_k \dots y_P$

$1 \leqslant l \leqslant N$

$x_1 \qquad x_l \qquad x_N$

**FIG.7A**

Y(i+1)

$x_1 \qquad\qquad\qquad x_N$

**FIG.7B**

$1 \leqslant k \leqslant P$

$1 \leqslant i \leqslant M$

Z(k)

$z_1 \dots z_i \dots z_M$

$1 \leqslant l \leqslant N$

$x_1 \dots\dots\dots x_l \dots\dots\dots x_N$

**FIG.8A**

Z(k+1)

$x_1 \dots\dots\dots x_l \dots\dots\dots x_N$

**FIG.8B**

5-Ⅹ-PHF 89-537

# RAPPORT DE RECHERCHE EUROPEENNE

Office européen des brevets

Numero de la demande

EP 90 20 0992

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | APPLIED OPTICS, vol. 26, no. 23, 1 décembre 1987, pages 5081-5084, Optical Society of America; L.D. JACKEL et al.: "Building a hierarchy with neural networks: an example-image vector quantization"<br>* Paragraphe III - pages 5082-5084 *<br>--- | 1,14,12,16 | G 06 F 15/80<br>H 04 N 7/13 |
| A | PROCEEDINGS VLSI AND COMPUTER, FIRST INTERNATIONAL CONFERENCE ON COMPUTER TECHNOLOGY, SYSTEMS AND APPLICATIONS, Hamburg, 11-15 mai 1987, pages 859-863, IEEE Computer Society; M.H. AL-MUIFRAJE: "Networks of memory elements - a processor for industrial piece-parts recognition"<br>* Page 860, colonne 1, lignes 7-50, colonne 2, lignes 1-4; figure *<br>--- | 1,14,16 | |
| A | EP-A-0 037 164 (NESTOR)<br>* Page 18a, lignes 10-11; page 15, lignes 1-22; page 31, lignes 15-19; figures 5,8 *<br>----- | 1,14,16 | DOMAINES TECHNIQUES RECHERCHES (Int. Cl.5)<br><br>G 06 F 15/80<br>H 04 N 7/13<br>H 04 N 7/137<br>G 06 K 9/66 |

Le présent rapport a été établi pour toutes les revendications

| Lieu de la recherche | Date d'achèvement de la recherche | Examinateur |
|---|---|---|
| LA HAYE | 13-07-1990 | DHEERE R.F.B.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)